# EUROPEAN PATENT APPLICATION

(11) **EP 4 559 790 A1**
(43) Date of publication of application: **28.05.2025**
(21) Application number: 24209673.3
(22) Date of filing: 30.10.2024
(51) Int. Cl.: B62J 1/08, B62K 19/36

(54) **DROPPER SEATPOST FACILITATING OF ADJUSTING FLUID PRESSURE**

(30) Priority: 23.11.2023 TW 112212755 U
(71) Applicant: J.D Components Co., Ltd., Shou Shui Hsiang, Chang Hua Hsien (TW)
(72) Inventor: FENG, PIN-CHIEH, 504 SHAN HSI VILL. (TW); LIN, YU-AN, 504 SHAN HSI VILL. (TW)
(74) Representative: Straus, Alexander

(57) **Abstract**

A dropper seatpost (10) includes an outer tube (20) and an inner tube (30) disposed in the outer tube (20) and having a first oil chamber (34) and a second oil chamber (35) connected to the first oil chamber (34). A fluid chamber (611) is provided between the top and bottom ends (31, 32) of the inner tube (30). A pressure adjustment member (50) is disposed in the first oil chamber (34) to push the oil (O) from the first oil chamber (34) to the second oil chamber (35). A floating piston (67) is disposed between the second oil chamber (35) and the fluid chamber (611) and pushed by the oil (O) stored in the second oil chamber (35) to compress the high-pressure fluid (G) stored in the fluid chamber (611). Thus, the present invention allows a user to conveniently adjust pressure of the high-pressure fluid (G). The arrangement of the first and second oil chambers (34, 35) does not significantly compromise the structural integrity of the inner tube (30), ensuring that it provides effective support.

## Description

### BACKGROUND OF THE INVENTION

### 1. Field of the Invention

The present invention relates to dropper seatposts and more particularly, to a dropper seatpost that is convenient to adjust fluid pressure.

### 2. Description of the Related Art

The bicycle seatpost disclosed by TW M642657 has a longitudinal adjustment hole at the top end of the inner tube, and multiple drive holes are arranged around the knob. When adjusting the pressure of the high-pressure gas stored in the cylinder, a tool (such as a screwdriver) is inserted through the adjustment hole and engages with one of the drive holes on the knob. This action forces the knob to rotate in place, which drives the adjustment member to move axially up or down along the inner tube, simultaneously pushing or releasing the floating piston. This allows for the adjustment of the space in the upper fluid chamber, thereby achieving the desired adjustment of the high-pressure gas pressure.

However, during the adjustment process, the aforesaid tool can only engage one drive hole at a time, and the limited length of the adjustment hole necessitates that the user repeatedly rotates the knob to move the adjustment member a sufficient distance to achieve the desired pressure adjustment. This makes the operation quite inconvenient. Additionally, the presence of the adjustment hole compromises the structural integrity of the inner tube, increasing the risk during riding.

### SUMMARY OF THE INVENTION

It is one objective of the present invention to provide a dropper seatpost, which allows a user to conveniently adjust a pressure of the high-pressure fluid.

To attain the above objective, the dropper seatpost of the present invention comprises an outer tube, an inner tube, a pressure adjustment member, and a floating piston. The inner tube is disposed movably upward and downward in the outer tube. The inner tube has a top end located outside the outer tube and a bottom end located inside the outer tube. The top end of the inner tube has a first oil chamber and a second oil chamber connected to the first oil chamber. The first and second oil chambers are used for storing an oil. The inner tube has a fluid chamber between the top and bottom ends of the inner tube for storing a high-pressure fluid. The pressure adjustment member is disposed movably in the first oil chamber and driven by an external force to push the oil stored in the first oil chamber to the second oil chamber. The floating piston is disposed movably upward and downward between the second oil chamber and the fluid chamber, such that the floating piston can be pushed by the oil stored in the second oil chamber to compress the high-pressure fluid.

It can be seen from the above that when increasing the pressure of the high-pressure fluid, a user applies an external force to move the pressure adjustment member inward, causing it to push the oil from the first oil chamber into the second oil chamber. Subsequently, the oil in the second oil chamber pushes the floating piston downward, so that the floating piston compresses the high-pressure fluid and thereby increasing its pressure. On the contrary, when decreasing the pressure of the high-pressure fluid, the user applies an external force to move the pressure adjustment member reversely, causing the oil in the second oil chamber to release the force exerted on the floating piston, thus reducing the pressure of the high-pressure fluid. Thai is to say, the dropper seatpost of the present invention allows the user to conveniently adjust the pressure of the high-pressure fluid, and further, the arrangement of the first and second oil chambers does not significantly compromise the structural integrity of the inner tube, ensuring that it provides effective support.

Preferably, the dropper seatpost further provides a fluid pressure cylinder and a push rod. The fluid pressure cylinder is disposed in the inner tube and has a cylinder body provided with the fluid chamber and the floating piston disposed in the cylinder body. The push rod has a head portion located inside the second oil chamber and a rod portion provided with a top end located inside the second oil chamber and connected to the head portion and a bottom end penetrated in the cylinder body and abutted with the floating piston. In this way, when the head portion of the push rod is pushed by the oil stored in the second oil chamber, the rod portion of the push rod pushes the floating piston downward, such that the floating piston compresses the high-pressure fluid stored in the cylinder body.

Preferably, the fluid pressure cylinder further comprises a guide member disposed in the cylinder body and located between the second oil chamber and the floating piston. The guide member has a perforation penetrated by the rod portion of the push rod for guiding the push rod to move down without misalignment.

Preferably, a lower stop portion is provided at a periphery wall of the lower oil area and rested against the heat portion of the push rod for preventing the push rod from continuing to move downward.

Preferably, the second oil chamber includes an upper oil area connected to the first oil chamber through a passage, and a lower oil area axially connected to the upper oil area and provided with the push rod. An upper stop ring is provided between the upper and lower oil areas and rested against the head portion of the push rod for preventing the push rod from entering the upper oil area.

Preferably, the top end of the inner tube has an oil filling hole axially connected to the upper oil area and closed by a top cover. When the oil level is insufficient, the top cover is removed to add oil to the second oil chamber through the oil filling hole. Once the oil level is adequate, the top cover is reattached.

Preferably, the top cover has a fine adjustment screw hole connected to the upper oil area and the outside. A fine adjustment member is screwed to the fine adjustment screw hole and driven by an external force to move toward the second oil chamber and push the oil stored in the second oil chamber toward the floating chamber. In this way, when the oil level in the first oil chamber decreases to a point where it can no longer exert sufficient force on the oil in the second oil chamber, the fine adjustment member can be used to directly push the oil in the second oil chamber, causing it to push the floating piston downward.

Preferably, the top end of the inner tube has an adjustment screw hole axially connected to the first oil chamber. The pressure adjustment member has a threaded head portion screwed to the adjustment screw hole, and a body portion connected to the threaded head portion and penetrated in the first oil chamber. In this way, the pressure adjustment member can be driven by a tool (such as a hexagonal wrench) to move toward the first oil chamber for pushing the oil stored in the first oil chamber to the second oil chamber.

Preferably, an external stop ring is provided at one end of the adjustment screw hole and rested against the threaded head portion of the pressure adjustment member for preventing the pressure adjustment member from separating from the adjustment screw hole.

Preferably, an internal stop portion is formed between the adjustment screw hole and the first oil chamber and rested against the threaded head portion of the pressure adjustment member for preventing the pressure adjustment member from entering the first oil chamber.

Preferably, the top end of the inner tube has an oil injection hole connected to the first oil chamber and provided with a plug. In this way, after the plug is removed, the oil can be replenished in the first oil chamber through the oil injection hole. After the replenishment is completed, the plug is reattached.

Preferably, the dropper seatpost further provides a fluid pressure cylinder disposed in the inner tube and having a cylinder body provided with the fluid chamber and the floating piston disposed in the cylinder body. In this way, the floating piston can be directly pushed by the oil in the second oil chamber to compress the high-pressure fluid.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a perspective view of a dropper seatpost of a first embodiment of the present invention.
FIG. 2 is a partially exploded view of the dropper seatpost of the first embodiment of the present invention.
FIG. 3 is a sectional view of the dropper seatpost of the first embodiment of the present invention.
FIG. 4 is a sectional view of the dropper seatpost of the first embodiment of the present invention, showing the relationship between the pressure adjustment member and the first oil chamber.
FIG. 5 is a sectional view of the dropper seatpost of the first embodiment of the present invention in another perspective, showing the relationship between the push rod and the second oil chamber.
FIG. 6 is similar to FIG. 4, showing that the pressure adjustment member pushes the oil in the first oil chamber.
FIG. 7 is similar to FIG. 5, showing that the oil in the second oil chamber pushes the push rod downward.
FIG. 8 is similar to FIG. 7, showing that the fine adjustment member pushes the oil in the upper oil area.
FIG. 9 is a flowchart of the dropper seatpost of a second embodiment of the present invention, showing the process of replenishing oil.
FIG. 10 is a sectional view of the dropper seatpost of a second embodiment of the present invention.
FIG. 11 is a sectional view of the dropper seatpost of a third embodiment of the present invention.

### DETAILED DESCRIPTION OF THE INVENTION

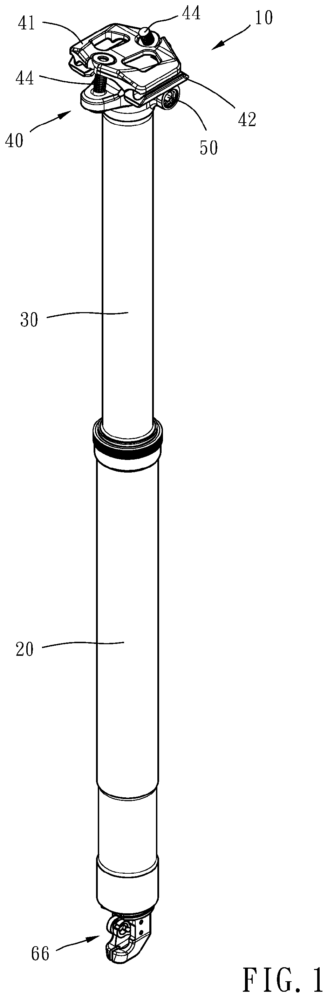

Referring to FIGS. 1 to 3, a dropper seatpost 10 of the present invention comprises an outer tube 20, an inner tube 30, a saddle clamping device 40, a pressure adjustment member 50, a fluid pressure cylinder 60, and a push rod 70.

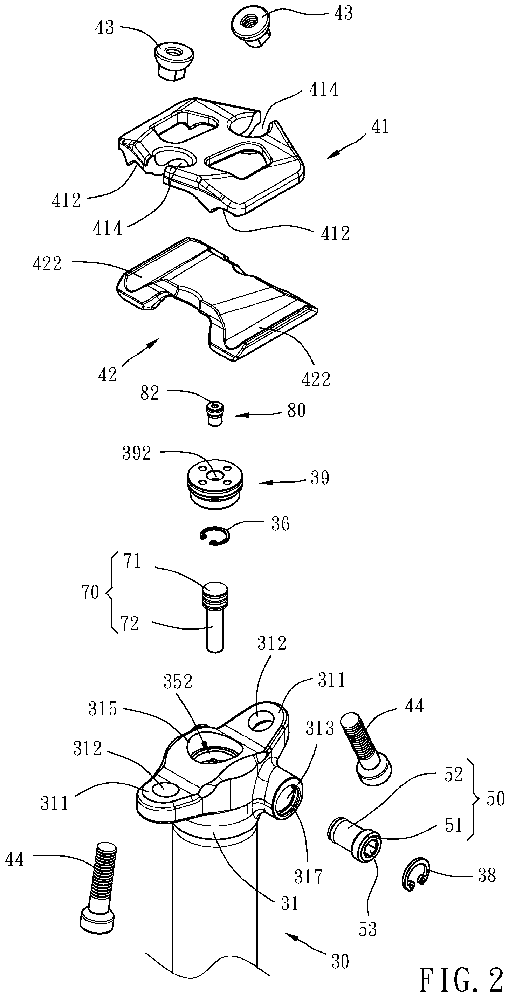

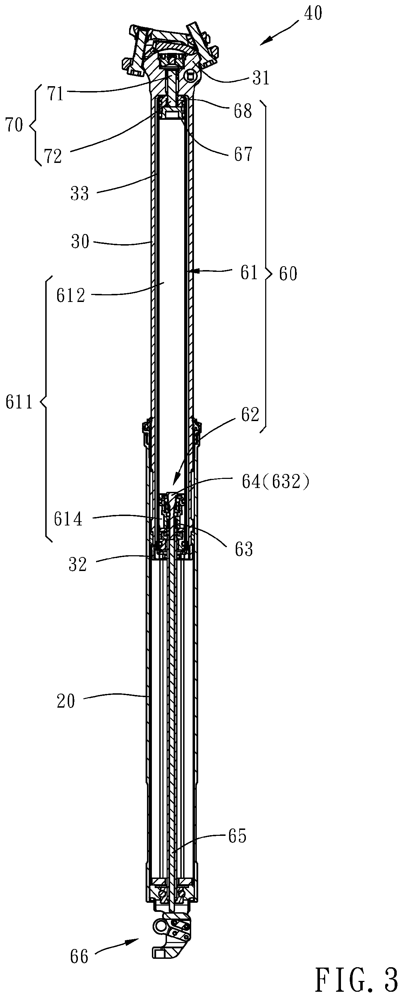

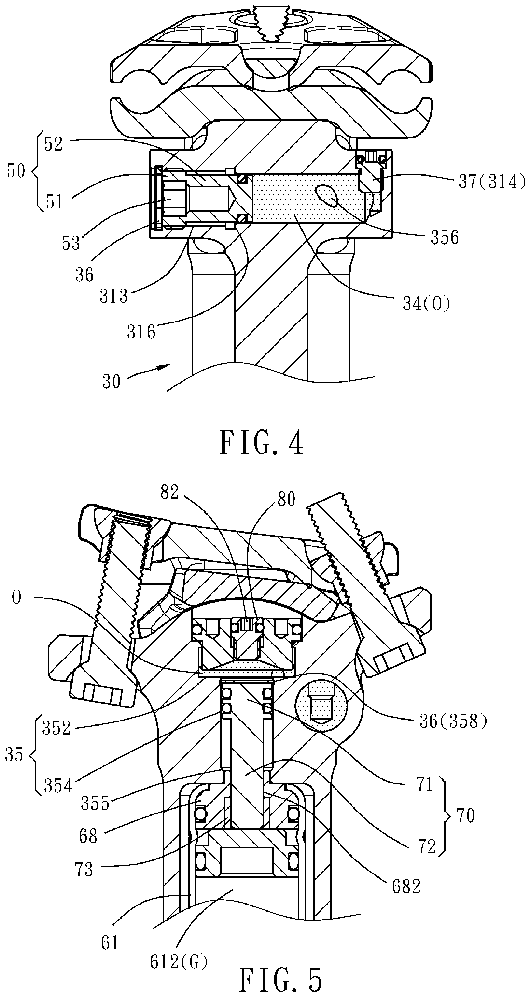

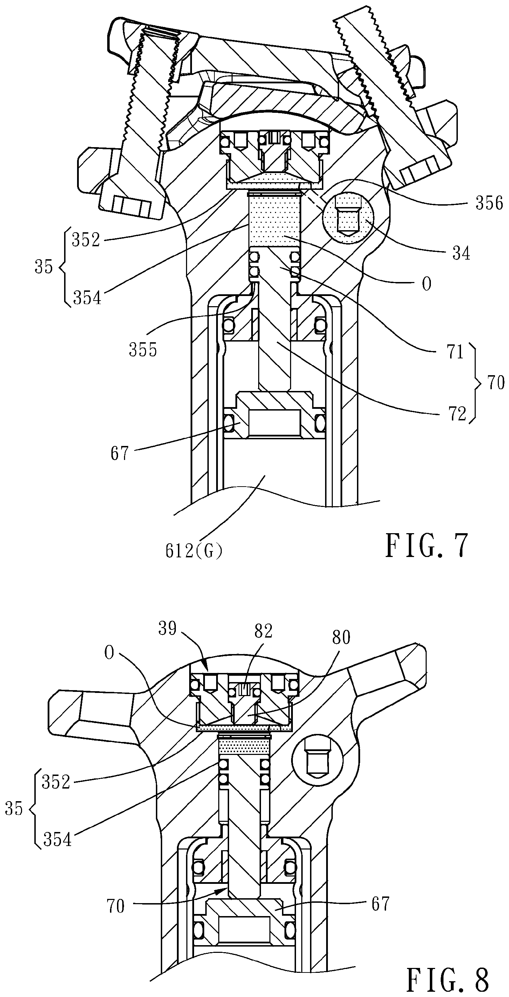

The inner tube 30 is inserted into the outer tube 20 from the top end of the outer tube 20. As shown in FIGS. 2 and 3, the inner tube 30 has a top end 31 located outside the outer tube 20, a bottom end 32 located inside the outer tube 20, and a receiving chamber 33 located between the top and bottom ends 31, 32. The top end 31 has two opposite ear portions 311 each provided with a countersunk hole 312, and the top end 31 further has a first oil chamber 34 and a second chamber 35. The first and second oil chamber 34, 35 are used for storing oil O. The first oil chamber 34 extends along a radial direction of the inner tube 30. The second oil chamber 35 extends an axial direction of the inner tube 30 and has an upper oil area 352 and a lower oil area 354. The upper oil area 352 has an outer diameter greater than an outer diameter of the lower oil area 354, and the upper oil area 352 is connected to the first oil chamber 34 through a passage 356 (as shown in FIGS. 4 and 7). The lower oil area 354 is located above the receiving chamber 33 and axially connected to the upper oil area 352. A lower stop portion 355 is provided at a periphery wall of the lower oil area 354. Additionally, as shown in FIG. 5, an upper annular groove 358 is formed between the upper oil area 352 and the lower oil area 354, and an upper stop ring 36 is engaged with the upper annular groove 358. As shown in FIGS. 2, 4, and 5, the top end 31 of the inner tube 30 further has an adjustment screw hole 313, an oil injection hole 314, and an oil filling hole 315. The adjustment screw hole 313 is axially connected to one end of the first oil chamber 34 and forms an internal stop portion 316 with the first oil chamber 34. The oil injection hole 314 is radially connected to the opposite end of the first oil chamber 34 and closed by a plug 37. The oil filling hole 314 is provided at a top surface of the inner tube 30 and axially connected to the second oil chamber 35. An outer annular groove 317 is formed at a periphery wall of the adjustment screw hole 313, and an external stop ring 38 is engaged with the outer annular groove 317. A top cover 39 is provided on the oil filling hole 315, and the top cover 39 has a fine adjustment screw hole 392 connected to the upper oil area 352 and the outside. A fine adjustment member 80 is screwed to the fine adjustment screw hole 392 and has a hexagonal hole 82 at its top surface.

The saddle clamping device 40 includes an upper clamp 41, a lower clamp 42, two nuts 43, and two bolts 44. As shown in FIGS. 1 and 2, the bottom surface of two lateral sides of the upper clamp 41 have two upper clamping grooves 412, and another two lateral sides of the upper clamp 41 have two nut holes 414. The top surface of two lateral sides of the lower clamp 42 have two lower clamping grooves 422 corresponding to the upper clamping grooves 412. The nuts 43 are installed in the nut holes 414 of the upper clamp 41. The bolts 44 are penetrated through the countersunk holes 312 and screwed to the nuts 43. In this way, the oil filling hole 315 are covered after completing the assembly of the saddle clamping device 40, and two saddle rails (not shown) of a saddle (not shown) are clamped between the upper and lower clamping grooves 412, 422 to complete the assembly with the saddle.

As shown in FIGS. 2 and 4, the pressure adjustment member 50 includes a threaded head portion 51 screwed to the adjustment screw hole 313 of the inner tube 30, and a body portion 52 connected to the threaded head portion 51 and penetrated in the first oil chamber 34. Additionally, the pressure adjustment member 50 further has a hexagonal hole 53 recessed from the threaded head portion 51 towards the body portion 52.

The fluid pressure cylinder 60 includes a cylinder body 61 and a control valve 62. As shown in FIG. 3, the cylinder body 61 is installed in the receiving chamber 33 of the inner tube 30 and has a fluid chamber 611 for storing a high-pressure fluid G (such as gas, oil or a mixture of gas and oil). The control valve 62 has a valve seat 63, a valve rod 64, and a control rod 65. The valve seat 63 is mounted in the cylinder body 61 to divide the fluid chamber 611 into an upper fluid chamber 612 and a lower fluid chamber 614, and the valve seat 63 has a valve hole 632 connected to the upper fluid chamber 612 and a lower fluid chamber 614. The valve rod 64 is disposed in the valve hole 632 of the valve seat 63 for controlling the connection between the upper fluid chamber 612 and the lower fluid chamber 614. The control rod 65 is disposed in the outer tube 20 in such a way that the top end of the control rod 65 is penetrated through the bottom end of the outer tube 20 and inserted in the valve seat 63 to abut against the valve rod 64, and the bottom end of the control rod 65 is located outside the bottom end of the outer tube 20 for a trigger 66 to push up. In this way, when the control rod 65 is not pushed by the trigger 66, the valve rod 64 remains a closed state, such that the upper and lower fluid chambers 612, 614 are not connected to each other. At this time, the inner tube 30 can't be lifted or lowered relative to the outer tube 20, and the fluid pressure cylinder 60 provides a shock-absorbing effect to the inner tube 30. On the contrary, when the control rod 65 is pushed by the trigger 16, the valve rod 64 is opened, such that the upper and lower fluid chambers 612, 614 are connected to each other. At this time, if the saddle does not bear the weight of the rider, the inner tube 30 will be lifted relative to the outer tube 20, but if the saddle bears the weight of the rider, the inner tube 30 will be lowered relative to the outer tube 20.

The fluid pressure cylinder 60 further includes a floating piston 67 and a guide member 68. As shown in FIG. 5, the floating piston 67 is disposed movably upward and downward between the upper fluid chamber 612 of the cylinder body 61, and the guide member 68 is disposed in the upper fluid chamber 612 of the cylinder body 61 and located between the second oil chamber 35 and the floating piston 67 for separating the oil O and the high-pressure fluid G. In addition, the guide member 68 has a perforation 682 passing through the top and bottom ends thereof.

The push rod 70 includes a head portion 71 and rod portion 72. As shown in FIG. 5, the head portion 71 is located inside the second oil chamber 35. The top end of the rod portion 72 is located inside the second oil chamber 35 and connected to the head portion 71, and the bottom end of the rod portion 72 is inserted on the perforation 682 of the guide member 68 and abutted against the top surface of the floating piston 67. A bushing 73 is provided between the rod portion 72 and the guide member 68 for allowing the push rod 70 to be guided by the perforation 682 without misalignment when moving down.

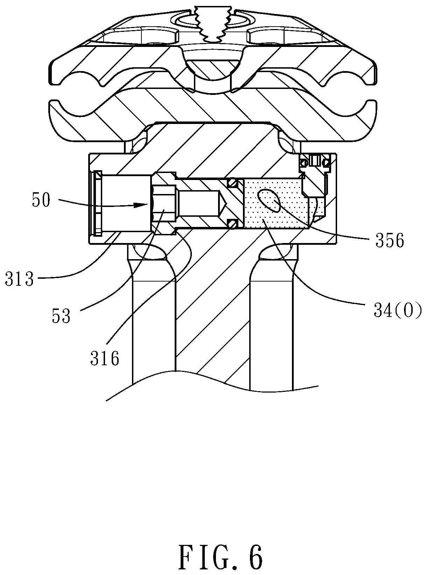

It can be seen from the above that to increase the pressure of the high-pressure fluid G, as shown in FIG. 6, a tool (such as a hex wrench, not shown) is engaged with the hexagonal hole 53 of the pressure adjustment member 50. By applying force to rotate the pressure adjustment member 50, it moves horizontally towards the first oil chamber 34 through the screw connection with the adjustment screw hole 313. During the movement of the pressure adjustment member 50, as shown in FIGS. 6 and 7, the oil O in the first oil chamber 34 is pushed through the passage 356 to flow into the upper oil area 352 of the second oil chamber 35. It then flows from the upper oil area 352 of the second oil chamber 35 to the lower oil area 354 of the second oil chamber 35. During this flow process, the oil O applies a pressure to the head portion 71 of the push rod 70, so that the push rod 70 is moved downward and pushes the floating piston 67 downward with its rod portion 72. As a result, the floating piston 67 compresses the space in the upper fluid chamber 612, thereby increasing the pressure of the high-pressure fluid G stored in the upper fluid chamber 612. On the contrary, to decrease the pressure of the high-pressure fluid G, the aforementioned tool is used to rotate the pressure adjustment member 50 in the reverse direction. This causes the pressure adjustment member 50 to move away from the first oil chamber 34. At this point, the pressure exerted by the oil O on the push rod 70 is released, which in turn releases the force applied by the push rod 70 on the floating piston 67. As a result, the floating piston 67 is pushed upward by the pressure of the high-pressure fluid G. During this movement, it simultaneously pushes the push rod 70 upward, which increases the space in the upper fluid chamber 612, thereby reducing the pressure of the high-pressure fluid G stored in the upper fluid chamber 612.

What needs to be supplemented here is that during the movement of the pressure adjustment member 50, as shown in FIG. 4, the pressure adjustment member 50 is restricted by the external stop ring 36 during the retreat process and cannot continue to retreat to prevent the pressure adjustment member 50 from being separated from the adjustment screw hole 313. On the other side, as shown in FIG. 6, the pressure adjustment member 50 is restricted from further movement during its forward progression by the internal stop portion 316 to prevent it from advancing too deeply into the first oil chamber 34. Additionally, during the movement of the push rod 70, as shown in FIG. 7, the push rod 70 is restricted from further downward movement by the lower stop portion 355 during its descent, preventing the push rod 70 from falling into the cylinder body 61. On the other side, as shown in FIG. 5, the push rod 70 is restricted from further upward movement by the upper stop ring 36 during its ascent, preventing the rod portion 72 of the push rod 70 from separating from the perforation 682 of the guide member 68.

Furthermore, in normal use, the plug 37 can be removed to directly inject oil into the first oil chamber 34 through the oil injection hole 314, thereby timely replenishing the oil. However, when the oil level decreases to a certain extent, it may happen that the pressure adjustment member 50 contacts the internal stop portion 316 but cannot push the push rod 70 downwards through hydraulic pressure. At this point, the saddle clamping device 40 is removed to expose the top cover 39, as shown in FIG. 8. Next, a tool (such as a hex wrench, not shown) is engaged with the hexagonal hole 82 of the fine adjustment member 80 to rotate the fine adjustment member 80. The fine adjustment member 80 is moved towards the upper oil area 352 due to its screw engagement with the fine adjustment screw hole 392. As such, the fine adjustment member 80 directly pushes the oil O in the second oil chamber 35, causing the oil O to push the push rod 70 downwards, thereby pushing the floating piston 67 down as well. In this way, the pressure adjustment of the high-pressure fluid G is completed even when the oil O is insufficient.

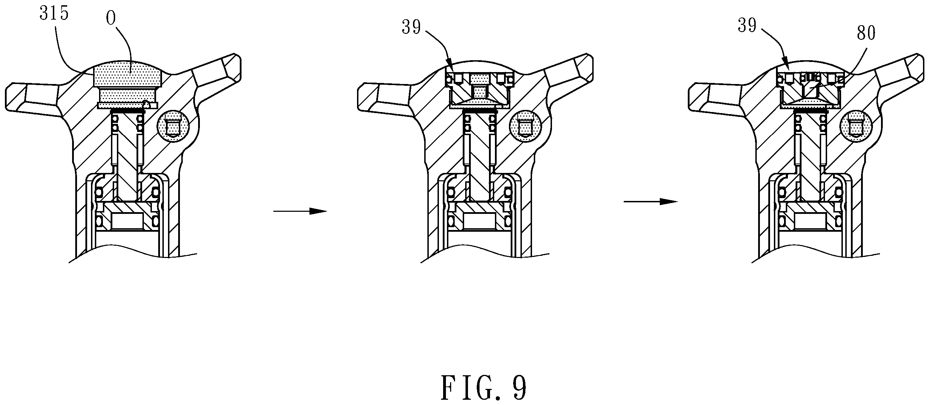

However, once the oil level has decreased to the point where the push rod 70 cannot be pushed down by hydraulic pressure even through the fine adjustment component 80, it is necessary to replenish the oil O. Before replenishing, the pressure adjustment member 50 should be retracted to rest against the external stop ring 36 (as shown in FIG. 4). Next, the top cover 39 is removed to expose the oil filling hole 315 (as shown in FIG. 9), allowing the oil O to be replenished through the oil filling hole 315. Afterward, the top cover 39 is reattached to allow any excess oil O to overflow. Finally, the fine adjustment member 80 is locked to be flushed with the top cover 39, thus completing the oil replenishment process.

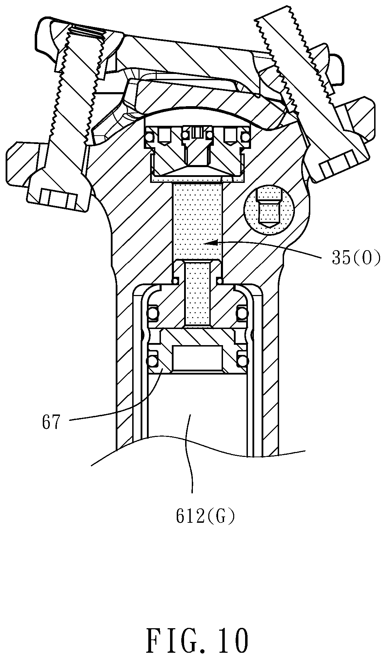

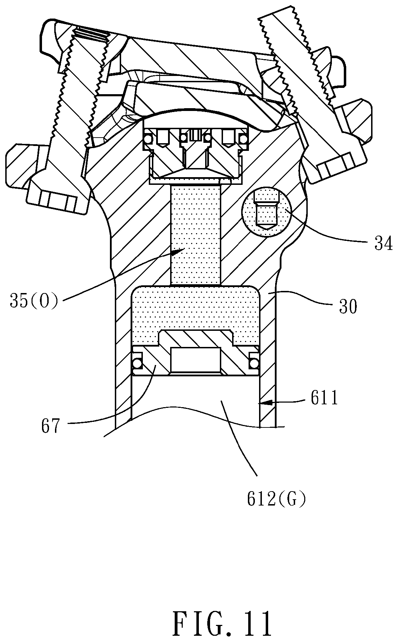

It is worth mentioning that the structure of the present invention can also be changed in different ways. As shown in FIG. 10, the push rod 70 is omitted in the second embodiment, such that the floating piston 67 is directly pushed by the oil O in the second oil chamber 35 to compress the high-pressure fluid G. As shown in FIG. 11, the fluid pressure cylinder 60 is omitted in the third embodiment, and further, the first oil chamber 34, the second chamber 35, and the fluid chamber 611 are integrated into the inner tube 30, such that the floating piston 67 is also directly pushed by the oil O in the second oil chamber 35 to compress the high-pressure fluid G.

As indicated above, the dropper seatpost 10 of the present invention allows the user to conveniently adjust the space of the fluid chamber 612, so that the shock-absorbing effect provided by the high-pressure fluid G is different accordingly. Additionally, the arrangement of the first and second oil chambers 34, 35 does not significantly compromise the structural integrity of the inner tube 30, ensuring that it provides effective support.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A dropper seatpost (10) **characterized in that** comprising:
an outer tube (20):
an inner tube (30) disposed movably upward and downward in the outer tube (20), the inner tube (30) having a top end (31) located outside the outer tube (20) and a bottom end (32) located inside the outer tube (20), the top end (31) of the inner tube (30) having a first oil chamber (34) for storing an oil (O) and a second oil chamber (35) communicating with the first oil chamber (34) for storing the oil (O), the inner tube (30) having a fluid chamber (611) between the top and bottom ends (31, 32) for storing a high-pressure fluid (G);
a pressure adjustment member (50) disposed movably in the first oil chamber (34) and driven by an external force to push the oil (O) stored in the first oil chamber (34) to the second oil chamber (35); and
a floating piston (67) disposed movably upward and downward between the second oil chamber (35) and the fluid chamber (611) and pushed by the oil (O) stored in the second oil chamber (35) to compress the high-pressure fluid (G).

2. The dropper seatpost (10) as claimed in claim 1, **characterized in that** comprising a fluid pressure cylinder (60) disposed in the inner tube (30) and having a cylinder body (61) provided with the fluid chamber (611) and the floating piston (67) disposed in the cylinder body (61), and a push rod (70) having a head portion (71) located in the second oil chamber (35) and a rod portion (72) provided with a top end located in the second oil chamber (35) and connected to the head portion (71) and a bottom end penetrated in the cylinder body (61) and abutted with the floating piston (67); when the head portion (71) of the push rod (70) is pushed by the oil (O) stored in the second oil chamber (35), the rod portion (72) of the push rod (70) pushes the floating piston (67) downward, such that the floating piston (67) compresses the high-pressure fluid (G).

3. The dropper seatpost (10) as claimed in claim 2, **characterized in that** the fluid pressure cylinder (60) further comprises a guide member (68) disposed in the cylinder body (61) and located between the second oil chamber (35) and the floating piston (67) and having a perforation (682) penetrated by the rod portion (72) of the push rod (70).

4. The dropper seatpost (10) as claimed in claim 2, **characterized in that** the second oil chamber (35) includes an upper oil area (352) communicating with the first oil chamber (34) through a passage (356), and a lower oil area (354) axially communicating with the upper oil area (352) and provided with the push rod (70); an upper stop ring (36) is provided between the upper and lower oil areas (352, 354) and configured to be rested against the head portion (71) of the push rod (70) for preventing the push rod (70) from entering the upper oil area (352).

5. The dropper seatpost (10) as claimed in claim 4, **characterized in that** the top end (31) of the inner tube (30) has an oil filling hole (315) axially communicating with the upper oil area (352) and closed by a top cover (39).

6. The dropper seatpost (10) as claimed in claim 5, **characterized in that** the top cover (39) has a fine adjustment screw hole (392) communicating with the upper oil area (352) and the outside; a fine adjustment member (80) is screwed to the fine adjustment screw hole (392) and driven by an external force to move toward the second oil chamber (35) and push the oil (O) stored in the second oil chamber (35) towards the floating piston (67).

7. The dropper seatpost (10) as claimed in claim 4, **characterized in that** a lower stop portion (355) is provided at a periphery wall of the lower oil area (354) and configured to be rested against the heat portion (71) of the push rod (70) for preventing the push rod (70) from continuing to move downward.

8. The dropper seatpost (10) as claimed in claim 1, **characterized in that** the top end (31) of the inner tube (30) has an adjustment screw hole (313) axially communicating with the first oil chamber (34); the pressure adjustment member (50) has a threaded head portion (51) screwed to the adjustment screw hole (313), and a body portion (52) connected to the threaded head portion (51) and penetrated in the first oil chamber (34).

9. The dropper seatpost (10) as claimed in claim 8,
**characterized in that** an external stop ring (36) is provided at one end of the adjustment screw hole (313) and configured to be rested against the threaded head portion (51) of the pressure adjustment member (50) for preventing the pressure adjustment member (50) from separating from the adjustment screw hole (313); or
**characterized in that** an internal stop portion (316) is formed between the adjustment screw hole (313) and the first oil chamber (34) and configured to be rested against the threaded head portion (51) of the pressure adjustment member (50) for preventing the pressure adjustment member (50) from entering the first oil chamber (34); or
**characterized in that** the top end (31) of the inner tube (30) has an oil injection hole (314) communicating with the first oil chamber (34) and provided with a plug (37).

10. The dropper seatpost (10) as claimed in claim 1, **characterized in that** comprising a fluid pressure cylinder (60) disposed in the inner tube (30) and having a cylinder body (61) provided with the fluid chamber (611) and the floating piston (67) disposed in the cylinder body (61).

11. The dropper seatpost (10) as claimed in claim 10, **characterized in that** the second oil chamber (35) has an upper oil area (352) communicating with the first oil chamber (34) through a passage (356) and a lower oil area (354) axially communicating with the upper oil area (352) and the fluid chamber (611).

12. The dropper seatpost (10) as claimed in claim 11, **characterized in that** the top end (31) of the inner tube (30) has an oil filling hole (315) axially communicating with the upper oil area (352) and closed by a top cover (39).

13. The dropper seatpost (10) as claimed in claim 12, **characterized in that** the top cover (39) has a fine adjustment screw hole (392) communicating with the upper oil area (352) and the outside; a fine adjustment member (80) is screwed to the fine adjustment screw hole (392) and driven by an external force to move toward the second oil chamber (35) and push the oil (O) stored in the second oil chamber (35) towards the floating piston (67).

14. The dropper seatpost (10) as claimed in claim 10, **characterized in that** the top end (31) of the inner tube (30) has an adjustment screw hole (313) axially communicating with the first oil chamber (34); the pressure adjustment member (50) has a threaded head portion (51) screwed to the adjustment screw hole (313), and a body portion (52) connected to the threaded head portion (51) and penetrated in the first oil chamber (34).

15. The dropper seatpost (10) as claimed in claim 14,
**characterized in that** an external stop ring (38) is provided at one end of the adjustment screw hole (313) and configured to be rested against the threaded head portion (51) of the pressure adjustment member (50) for preventing the pressure adjustment member (50) from separating from the adjustment screw hole (313); or
**characterized in that** an internal stop portion (316) is formed between the adjustment screw hole (313) and the first oil chamber (34) and configured to be rested against the threaded head portion (51) of the pressure adjustment member (50) for preventing the pressure adjustment member (50) from entering the first oil chamber (34); or
**characterized in that** the top end (31) of the inner tube (30) has an oil injection hole (314) communicating with the first oil chamber (34) and provided with a plug (37).
